# EUROPÄISCHE PATENTSCHRIFT

(11) **EP 0 844 602 B1**
(45) Veröffentlichungstag und Bekanntmachung des Hinweises auf die Patenterteilung: **25.08.1999**
(21) Anmeldenummer: 97120408.6
(22) Anmeldetag: 21.11.1997
(51) Int. Cl.: G11B 5/55, G11B 5/008, G11B 15/02

(54) **Anordnung zur unterbrechungsfreien Wiedergabe von Kassetten**
System for reproducing cassettes without interruption
Système de reproduction de cassettes sans interruption

(30) Priorität: 26.11.1996 DE 19648821
(43) Veröffentlichungstag der Anmeldung: 27.05.1998
(73) Patentinhaber: GRUNDIG Aktiengesellschaft, 90762 Fürth (DE)
(72) Erfinder: Ritter, Kai-Uwe, 90762 Fürth (DE); Pirner, Reinhard, 90762 Fürth (DE)

(56) Entgegenhaltungen:
- EP-A- 0 535 779
- PATENT ABSTRACTS OF JAPAN vol. 018, no. 057 (P-1684), 28.Januar 1994 & JP 05 274793 A (ALPINE ELECTRON INC), 22.Oktober 1993,
- PATENT ABSTRACTS OF JAPAN vol. 017, no. 550 (P-1624), 4.Oktober 1993 & JP 05 151509 A (SHARP CORP), 18.Juni 1993,
- PATENT ABSTRACTS OF JAPAN vol. 096, no. 009, 30.September 1996 & JP 08 124302 A (SONY CORP), 17.Mai 1996,
- PATENT ABSTRACTS OF JAPAN vol. 009, no. 327 (P-415), 21.Dezember 1985 & JP 60 151874 A (MITSUBISHI DENKI KK), 9.August 1985,
- PATENT ABSTRACTS OF JAPAN vol. 011, no. 097 (P-560), 26.März 1987 & JP 61 246903 A (PIONEER ELECTRONIC CORP), 4.November 1986,
- PATENT ABSTRACTS OF JAPAN vol. 012, no. 170 (P-705), 20.Mai 1988 & JP 62 281164 A (HITACHI LTD), 7.Dezember 1987,
- PATENT ABSTRACTS OF JAPAN vol. 009, no. 323 (P-414), 18.Dezember 1985 & JP 60 147903 A (TOSHIBA KK), 5.August 1985,
- PATENT ABSTRACTS OF JAPAN vol. 018, no. 060 (E-1499), 31.Januar 1994 & JP 05 276483 A (TOSHIBA CORP;OTHERS: 01), 22.Oktober 1993,
- PATENT ABSTRACTS OF JAPAN vol. 013, no. 176 (E-749), 25.April 1989 & JP 01 005178 A (MATSUSHITA ELECTRIC IND CO LTD), 10.Januar 1989,

## Beschreibung

Die Erfindung betrifft eine Anordnung zur unterbrechungsfreien Wiedergabe von Kassetten, mit den Merkmalen des Oberbegriffs nach Anspruch 1.

Bei Kassettenlaufwerken, sogenannten Reverselaufwerken, die für Kassetten verwendet werden, die gewendet werden können, so daß auf dem in der Kassette befindlichen Bandmaterial die doppelte Aufzeichungsdauer möglich ist, tritt beim Umschalten der Laufrichtung eine Pause ein, bis das wiederzugebende Signal erneut zur Verfügung steht. Um eine zu lange Pause zu vermeiden, wird bei vielen aus dem Stand der Technik bekannten Kassettenlaufwerken zudem eine schnelle Umschaltung der Bandlaufrichtung vorgenommen, die das Bandmaterial besonders stark belastet.

Aufgabe der vorliegenden Erfindung ist es deshalb, eine Anordnung zur unterbrechungsfreien Wiedergabe von Kassetten anzugeben, die zudem bandschonend arbeitet.

Es ist aus EP535779 bekannt, einen Pufferspeicher zu benutzen um die Dauer des Umschaltvorganges zu überbrücken:die Wiedergabedaten werden mit einer Zeit Tp (größer als die Überbrückungsdauer) verzögert.

Erfindungsgemäß wird die Aufgabe durch die Merkmale des Anspruchs 1 gelöst.

Die Erfindung kommt ohne Verzögerung der Wiedergabedaten aus.

Der Vorteil der Erfindung liegt insbesondere darin, daß eine unterbrechungsfreie Wiedergabe möglich ist, wobei die Zwischenspeicherung der Signale der Gegenspur eine bandschonende Umschaltung der Bandlaufrichtung erlaubt.

Weitere Vorteile der vorliegenden Erfindung ergeben sich aus den abhängigen Ansprüchen und der nachfolgenden Beschreibung der Erfindung anhand einer Figur.

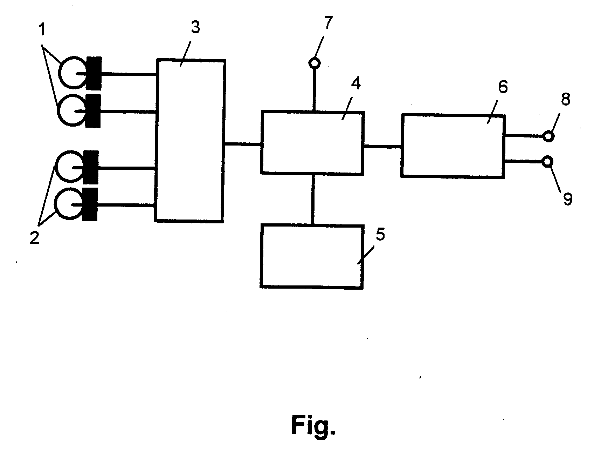

Die einzige Figur zeigt einen Prinzipaufbau der erfindungsgemäßen Anordnung, bei der nur die im Zusammenhang mit dem Verständnis der vorliegenden Erfindung nötigen Bestandteile dargestellt sind. Die Erfindung wird nachfolgend am Beispiel eines Audiokassettenlaufwerks für Stereotonwiedergabe beschrieben.

In der Figur sind zwei Paare von Tonköpfen 1 und 2, eine Einrichtung 3 zur Verarbeitung der von den Tonköpfen 1 und 2 stammenden Signale, eine Signalverarbeitungseinrichtung 4 mit einem Speicher 5 sowie eine Ausgabeeinrichtung 6 dargestellt.

Die Einrichtung 3 zur Verarbeitung der Tonkopfsignale umfaßt im wesentlichen Analog/Digital-Wandler zur Umsetzung der analogen Signale der Tonkopfpaare 1 und 2 in digitale Signale. Außerdem kann die Einrichtung 3 Verstärker zur Verstärkung der Tonkopfsignale enthalten. Die Signalverarbeitungseinrichtung 4 wird von einem digitalen Signalprozessor oder einem Mikrocomputer gebildet. Sie weist einen Ausgang 7 auf, der zur Steuerung des Bandtransport des Kassettenlaufwerks dient. Die Ausgabeeinrichtung 6 besteht im wesentlichen aus Digital/Analog-Wandlern, die die verarbeiteten Signale der Tonköpfe wieder in analoge Signale umwandeln, so daß an Ausgängen 8 und 9 der Ausgabeeinrichtung die Stereotonsignale zur Wiedergabe zur Verfügung stehen. Außerdem kann die Ausgabeeinrichtung 6 Verstärker für die Wiedergabe der Stereotonsignale enthalten.

Bei der Wiedergabe des Stereotonsignals einer Stereospur, beispielsweise einer Wiedergabe mit dem Tonkopfpaar 1, werden die Signale des Tonkopfpaars 1 von der Einrichtung 3 verstärkt und in digitale Signale gewandelt. Die Signalverarbeitungseinrichtung 4 beeinflußt die digitalen Signale in gewünschter Weise, beispielsweise können bestimmte Frequenzen wie mit einem Equalizer verändert werden. Zur Verarbeitung der digitalen Signale in der Signalverarbeitungseinrichtung 4 werden die digitalen Signale im Speicher 5 gespeichert. Die Ausgabeeinrichtung 6 wandelt die digitalen Signale in analoge Signale um und verstärkt diese. An den Ausgängen 8 und 9 stehen somit Signale zur Ansteuerung von elektroakustischen Wandern zur Verfügung.

Während der Wiedergabe der Stereotonsignale der ersten Stereospur, die vom Tonkopfpaar 1 stammen, werden gleichzeitig die Stereotonsignale der zweiten Stereotonspur vom Tonkopfpaar 2 abgetastet. Allerdings werden die Stereotonsignale der zweiten Stereospur zeitlich rückwärts abgetastet. Die Stereotonsignale werden in der oben für das erste Stereotonsignal beschriebenen Weise von Einrichtung 3 und Signalverarbeitungseinrichtung 4 verarbeitet und im Speicher 5 abgespeichert. Der Aufbau des Speichers 5 ist so gewählt, daß die gespeicherten digitalen Signale auch entgegen der Einschreibrichtung ausgelesen werden können, d. h., die zuletzt in den Speicher 5 eingeschriebenen digitalen Signale werden zuerst ausgelesen.

Wird das Ende des Bandmaterials der wiederzugebenden Kassette erreicht und vom Kassettenlaufwerk erkannt, wird ein Umschaltvorgang eingeleitet, bei dem die Transportrichtung des Bandmaterials geändert wird. Gleichzeitig mit der Einleitung des Umschaltvorgangs wird die Wiedergabe der Stereotonsignale der ersten Stereospur von der Signalverarbeitungseinrichtung 4 beendet und die im Speicher 5 gespeicherten digitalen Signale der zweiten Stereospur werden in umgekehrter Reihenfolge ausgelesen, d. h., die zuletzt, also bis zum Zeitpunkt des Umschaltvorgangs, eingelesenen digitalen Signale werden als erste aus dem Speicher ausgelesen und von der Signalverarbeitungseinrichtung 4 verarbeitet. Auf diese Weise ist es möglich, daß an den Ausgängen 8 und 9 der Ausgabeeinrichtung 6 ein unterbrechungsfreies Stereotonsignal abgegriffen werden kann.

Nach Beendigung des Umschaltvorgangs der Transportrichtung des Bandmaterials wird das jetzt wiederzugebende zweite Stereotonsignal vom Tonkopfpaar 2 abgetastet. Allerdings ist zu beachten, daß die von der Signalverarbeitungseinrichtung 4 zwischenzeitlich aus dem Speicher 5 ausgelesenen digitalen Signale gegenüber den vom Tonkopfpaar 2 und der Einrichtung 3 stammenden digitalen Signalen um die Zeitdauer des Umschaltvorgangs vorauseilen. Deshalb wird über den Ausgang 7 der Signalverarbeitungseinrichtung 4 der Bandtransport so angesteuert, daß die Bandtransportgeschwindigkeit erhöht wird. Die erhöhte Bandtransportgeschwindigkeit wird solange beibehalten, bis die aus dem Speicher 5 stammenden digitalen Signale und die vom Tonkopfpaar 2 stammenden und von der Einrichtung 3 gewandelten digitalen Signale phasengleich sind. Die Phasengleichheit der digitalen Signale kann beispielsweise durch die Bestimmung der Korrelation der digitalen Signale durch die Signalverarbeitungseinrichtung 4 festgestellt werden.

Die Größe des Speichers 5 für das vorliegende erfindungsgemäße Kassettenlaufwerk ist mindestens so zu bemessen, daß das digitale Signal für einen Zeitraum gespeichert werden kann, der sich aus der Zeit für den Umschaltvorgang des Bandtransports und der Zeit für die Herstellung der Phasengleichheit ergibt.

Wenn es auf die Exaktheit des Umschaltvorgangs der Wiedergabe des digitalen Signals von der Stereospur bzw. aus dem Speicher 5 nicht ankommt, kann auf die Überprüfung der oben beschriebenen Korrelation der digitalen Signale verzichtet werden. Ausgehend von der bekannten Zeitdauer des Umschaltvorgangs des Bandtransports wird dann die Bandtransportgeschwindigkeit solange um einen bestimmten Faktor erhöht, bis die Phasengleichheit in etwa erreicht ist. Die Mindestgröße des Speichers 5 ergibt sich dann aus der bekannten Zeitdauer des Umschaltvorgangs des Bandtransports und der Zeit für die Herstellung der Phasengleichheit, die sich aus dem Faktor für die Erhöhung der Bandtransportgeschwindigkeit ergibt.

Neben der beschriebenen automatischen Umschaltung der Transportrichtung des Bandmaterials, ist es auch möglich, daß beim Erreichen des Endes des Bandmaterials eine manuelle Umschaltung der Transportrichtung vorgenommen wird.

## Patentansprüche

1. Anordnung zur unterbrechungsfreien Wiedergabe von Kassetten, bei denen auf dem Bandmaterial mindestens zwei in gegenläufiger Richtung aufgezeichnete Spuren vorhanden sind, mit
mindestens einem Tonkopf (1;2) für jede der gegenläufigen Spuren, und einem Kassettenlaufwerk mit umschaltbarer Bandtransportrichtung für den Wiedergabebetrieb,
wobei die Anordnung bei der Wiedergabe der gegenläufigen Spuren das Ende der aktuell wiedergegebenen Spur oder Spuren erkennt worauf hin die Bandtransportrichtung des Kassettenlaufwerks auf die Wiedergabe der anderen Spur oder Spuren umschaltet wird,
**dadurch gekennzeichnet,**
daß eine Einrichtung (3,4,6) vorhanden ist, welche das Signal der anderen Spur oder Spuren während der Wiedergabe der aktuell wiedergegebenen Spur oder Spuren zeitlich rückwärts verarbeitet und in einem Speicher (5) zwischenspeichert,
daß bei Erkennung des Endes der aktuell wiedergegebenen Spur oder Spuren durch die Anordnung, die Einrichtung (3,4,6) die zwischengespeicherten Signale der anderen Spur oder Spuren zeitrichtig wiedergibt, und
daß die Einrichtung (3,4,6) den Bandtransport des Kassettenlaufwerks nach dem Umschaltvorgang solange beschleunigt, bis von der Einrichtung (3,4,6) die Übereinstimmung der aus dem Speicher (5) wiedergegebenen Signale mit den Signalen der anderen Spur oder Spuren festgestellt wird.

2. Anordnung nach Anspruch 1,
**dadurch gekennzeichnet,**
daß die Einrichtung (3,4,6) die Übereinstimmung der Signale mittels Überprüfung der Korrelation der Signale feststellt.

3. Anordnung nach Anspruch 1,
**dadurch gekennzeichnet,**
daß die Einrichtung (3,4,6) die Übereinstimmung der Signale feststellt, wenn eine Zeitdauer verstrichen ist, die sich aus der Zeitdauer des Umschaltvorgangs der Bandtransportrichtung und der Zeitdauer des beschleunigten Bandtransports ergibt, wobei sich die Zeitdauer des beschleunigten Bandtransports aus dem Faktor der Beschleunigung des Bandtransports ergibt.

4. Anordnung nach einem der Ansprüche 1 bis 3,
**dadurch gekennzeichnet,**
daß die Einrichtung (3,4,6) Analog/Digital-Wandler (3), einen digitalen Signalprozessor oder Mikrocomputer (4) und einen Digital/Analog-Wandler (6) enthält.

5. Anordnung nach Anspruch 4,
**dadurch gekennzeichnet,**
daß die Wandler (3,6) Verstärker aufweisen.

## Claims

1. System for the interruption-free reproduction of cassettes which have at least two tracks recorded in opposite directions on the tape material, comprising,
for the reproduction mode, at least one sound head (1; 2) for each of the oppositely directed tracks and a cassette drive mechanism having a tape transport direction which can be switched over,
the system detecting the end of the currently reproduced track or tracks during the reproduction of the oppositely directed tracks, whereupon the tape transport direction of the cassette drive mechanism is switched over to the reproduction of the other track or tracks,
characterized
in that a device (3, 4, 6) is present which processes the signal of the other track or tracks in reverse time direction during the reproduction of the currently reproduced track or tracks and stores it temporarily in a memory (5),
in that, when the system recognizes the end of the currently reproduced track or tracks, the device (3, 4, 6) reproduces the temporarily stored signals of the other track or tracks in the correct time direction, and
in that the device (3, 4, 6) accelerates the tape transport of the cassette drive mechanism after the switching over operation until the device (3, 4, 6) detects the coincidence of the signals reproduced from the memory (5) with the signals of the other track or tracks.

2. System according to Claim 1, characterized in that the device (3, 4, 6) detects the coincidence of the signals by checking the correlation of the signals.

3. System according to Claim 1, characterized in that the device (3, 4, 6) detects the coincidence of the signals if a time duration has elapsed which results from the time duration of the operation of switching over the tape transport direction and the time duration of the accelerated tape transport, the time duration of the accelerated tape transport resulting from the acceleration factor of the tape transport.

4. System according to one of Claims 1 to 3,
characterized in that the device (3, 4, 6) contains analog/digital converters (3), a digital signal processor or microcomputer (4) and a digital/analog converter (6).

5. System according to Claim 4, characterized in that the converters (3, 6) comprise amplifiers.

## Revendications

1. Appareil pour la reproduction sans interruption de cassettes, dans lesquelles au moins deux pistes enregistrées dans des sens opposés sont présentes sur le matériau en forme de bande, comportant
au moins une tête son (1;2) pour chacune des pistes s'étendant dans des directions opposées, et un dérouleur de cassette avec un sens commutable de déplacement de la bande pour le fonctionnement de reproduction,
l'appareil identifiant, lors de la reproduction des pistes en des sens opposés, l'extrémité de la ou des pistes actuellement reproduites, à la suite de quoi le sens de déplacement de la bande du dérouleur de cassette est commuté sur la reproduction de l'autre ou des autres pistes,
caractérisé en ce
qu'il est prévu un dispositif (3,4,6) qui traite d'une manière rétrograde dans le temps le signal de la ou des autres pistes pendant la reproduction de la ou des pistes actuellement reproduites, et les mémorise temporairement dans une mémoire (5),
que lors de l'identification de la fin de la ou des pistes actuellement reproduites, par l'appareil, le dispositif (3,4,6) reproduit d'une manière correcte dans le temps les signaux mémorisés temporairement de la ou des autres pistes, et
que le dispositif (3,4,6) accélère l'entraînement de la bande du dérouleur de cassette après un processus de commutation jusqu'à ce que le dispositif (3,4,6) ait établi la coïncidence entre les signaux reproduits à partir de la mémoire (5) et les signaux de la ou des autres pistes.

2. Appareil selon la revendication 1,
caractérisé en ce
que le dispositif (3,4,6) détermine la coïncidence des signaux au moyen d'un contrôle de la corrélation des signaux.

3. Appareil selon la revendication 1,
caractérisé en ce
que le dispositif (3,4,6) détermine la coïncidence des signaux au bout de l'écoulement d'une durée qui se compose de la durée du processus de commutation du sens de déplacement de la bande et de la durée du déplacement accéléré de la bande, la durée du déplacement accéléré de la bande étant obtenue à partir du facteur de l'accélération de l'entraînement de la bande.

4. Appareil selon l'une des revendications 1 à 3,
caractérisé en ce
que le dispositif (3,4,6) contient des convertisseurs analogique/numérique (3), un processeur numérique de signaux ou un micro-ordinateur (4) et un convertisseur numérique/analogique (6).

5. Appareil selon la revendication 4,
caractérisé en ce
les convertisseurs (3,6) comportent des amplificateurs.
